# FASCICULE DE BREVET EUROPEEN

(11) **EP 2 818 781 B1**
(45) Date de publication et mention de la délivrance du brevet: **07.09.2016**
(21) Numéro de dépôt: 14174688.3
(22) Date de dépôt: 27.06.2014
(51) Int. Cl.: F16L 37/24, F16L 37/248, F16L 37/252, F16L 37/36, F16L 37/44

(54) **Elément femelle de raccord rapide et raccord rapide comprenant un tel element**
Buchse eines Schnellanschlusses, und eine solche Buchse umfassender Schnellanschluss
Female quick-connection element and quick connection including such an element

(30) Priorité: 28.06.2013 FR 1356290
(43) Date de publication de la demande: 31.12.2014
(73) Titulaire: STAUBLI FAVERGES, 74210 Faverges (FR)
(72) Inventeur: Tiberghien, Alain-Christophe, 74320 SEVRIER (FR); Durieux, Christophe, 73200 GILLY SUR ISERE (FR); Morel, Frédéric, 74210 LATHUILE (FR)
(74) Mandataire: Lavoix

(56) Documents cités:
- EP-A2- 0 843 122
- GB-A- 691 568

## Description

L'invention a trait à un élément femelle de raccord rapide destiné à coopérer, par emmanchement, avec un élément mâle correspondant.

Dans le domaine de la distribution de fluide gazeux ou liquide vers un véhicule automobile, ferroviaire ou aéronautique, il est connu d'utiliser un raccord rapide pour connecter un circuit d'alimentation appartenant à une station fixe à un circuit de distribution incorporé au véhicule. En général, un élément mâle d'un raccord rapide est monté sur le véhicule alors qu'un élément femelle de ce raccord appartient à la station fixe. Ce type d'application implique des contraintes sur le raccord rapide en termes d'encombrement, de débit à assurer et de manoeuvrabilité. En particulier, il convient de limiter des fuites de fluide et d'assurer un débit suffisant pour un transfert rapide de la quantité de fluide nécessaire au véhicule.

Il est connu de GB-A-691 568 d'intégrer un clapet à l'intérieur du corps d'un élément femelle de raccord et de guider ce clapet à la fois en translation et en rotation lorsqu'il s'éloigne de son siège, au moyen de galets insérés dans des rainures hélicoïdales. Les éléments de guidage du clapet dans son mouvement hélicoïdal encombrent la veine fluide, c'est-à-dire le volume normalement destiné à l'écoulement du fluide à l'intérieur du raccord lorsque ces éléments mâle et femelle sont accouplés. Ceci limite le débit du fluide et crée des pertes de charge. En outre, des mouvements relativement longs, selon une direction axiale, sont nécessaires pour guider les pièces de connexion des éléments mâle et femelle les unes par rapport aux autres lors de l'accouplement des éléments du raccord.

Par ailleurs, les contraintes mentionnées ci-dessus au sujet de la distribution de fluide vers un véhicule peuvent se retrouver dans d'autres domaines d'application.

C'est à ces contraintes qu'entend plus particulièrement répondre l'invention en proposant un nouvel élément de raccord rapide qui est compact, aisément manoeuvrable et dont la veine fluide n'est pas encombrée par des éléments de guidage d'un clapet.

A cet effet, l'invention concerne un élément femelle de raccord rapide destiné à coopérer, par emmanchement le long d'un axe d'emmanchement, avec un élément mâle de raccord rapide et comprenant :
- un corps centré sur un axe longitudinal, définissant un conduit de passage de fluide et comportant, à son extrémité distale, une face avant plane,
- une soupape comprenant un clapet logé dans le conduit de passage de fluide et mobile le long de l'axe longitudinal par rapport au corps, entre une position de fermeture de la soupape, en appui contre un siège de la soupape, et une position d'ouverture de la soupape, éloignée du siège,
- une bague de manoeuvre montée coulissante autour du corps et définissant, à son extrémité distale, une embouchure de réception de l'élément mâle, la bague étant équipée d'au moins un relief d'engagement avec un relief correspondant de l'élément mâle,
caractérisé en ce que l'élément femelle de raccord comprend en outre
- une bague de sécurité montée autour du corps, radialement à l'intérieur de la bague de manoeuvre, la bague de sécurité étant mobile axialement par rapport au corps entre une première position, dans laquelle la bague de manoeuvre et la bague de sécurité sont solidaires en rotation autour de l'axe longitudinal, et une deuxième position dans laquelle la bague de manoeuvre peut tourner autour de l'axe longitudinal par rapport à la bague de sécurité,
- des moyens de transformation, lorsque la bague de sécurité est dans sa deuxième position, d'un mouvement de rotation de la bague de manoeuvre autour de l'axe longitudinal et par rapport à la bague de sécurité, en un mouvement de translation axiale du corps par rapport à la bague de manoeuvre.

Grâce à l'invention, la bague de sécurité garantit, tant qu'elle est dans sa première position, que le corps de l'élément femelle ne peut pas être entraîné axialement du fait de la rotation de la bague de manoeuvre, rotation qui est possible lorsque la bague de sécurité est dans sa deuxième position. En d'autres termes, le déplacement du corps de l'élément femelle n'est possible qu'à partir de la deuxième position de la bague de sécurité, ce qui évite un déplacement prématuré du corps de l'élément femelle et limite en conséquence les risques de fuite.

Selon des aspects avantageux mais non obligatoires de l'invention, un tel élément femelle peut incorporer une ou plusieurs des caractéristiques suivantes, prises dans toute combinaison techniquement admissible :
- Les moyens de transformation de mouvement comprennent une bague d'entraînement montée mobile en rotation et solidaire en translation autour du corps, alors qu'une des bagues, parmi la bague de manoeuvre et la bague d'entraînement, est équipée d'au moins un organe de solidarisation en rotation de la bague d'entraînement avec la bague de manoeuvre, avec possibilité de mouvement axial relatif, et qu'une des bagues parmi la bague d'entraînement et la bague de sécurité est équipée d'au moins un organe de guidage de la bague d'entraînement dans un mouvement hélicoïdal par rapport à la bague de sécurité.
- Les moyens de transformation de mouvement comprennent une bague d'entraînement montée mobile en rotation et solidaire en translation autour du corps, alors qu'une des bagues, parmi la bague de sécurité et la bague d'entraînement, est équipée d'au moins un organe de solidarisation en rotation de la bague d'entraînement avec la bague de sécurité avec possibilité de mouvement relatif, et qu'une des bagues parmi la bague d'entraînement et la bague de manoeuvre est équipée d'au moins un organe de guidage de la bague d'entraînement dans un mouvement hélicoïdal par rapport à la bague de manoeuvre.
- L'organe de solidarisation en rotation et l'organe de guidage sont solidaires ou monoblocs avec la même bague.
- L'organe de solidarisation en rotation et l'organe de guidage sont confondus en un même organe. En variante, l'organe de solidarisation en rotation et l'organe de guidage sont deux organes distincts.
- L'organe de solidarisation en rotation et l'organe de guidage sont solidaires ou monoblocs avec deux bagues distinctes, parmi la bague de manoeuvre, la bague de sécurité et la bague d'entraînement.
- L'organe de solidarisation en rotation est un pion solidaire ou monobloc avec une des bagues et engagé dans une rainure au moins en partie longitudinale d'une autre des bagues, parallèle à l'axe longitudinal du corps, et l'organe de guidage est un pion solidaire ou monobloc avec l'une des bagues et engagé dans une rainure hélicoïdale d'une autre des bagues.
- Dans la première position de la bague de sécurité, le pion de solidarisation en rotation et de guidage est engagé dans une encoche qui prolonge la rainure hélicoïdale et qui s'étend parallèlement à l'axe longitudinal du corps.
- L'élément femelle comprend des moyens de rappel élastique de la bague de sécurité vers sa première position.
- Lorsque la bague de sécurité est dans sa deuxième position et tant que la bague de manoeuvre n'a pas tourné autour de l'axe longitudinal par rapport à sa position angulaire vis-à-vis de la bague de sécurité lorsque la bague de sécurité est dans'sa première position, une extrémité distale de la bague de sécurité fait saillie au-delà de la face avant du corps.
- Le clapet est pourvu d'une face avant plane affleurante avec la face avant plane du corps lorsque le clapet est en position de fermeture de la soupape.
- Le siège est formé par une surface tronconique interne du corps, convergente vers l'axe longitudinal en direction de l'avant de l'élément femelle.

L'invention concerne également un raccord rapide pour la jonction de deux canalisations de fluide qui comprend un élément femelle tel que mentionné ci-dessus ainsi qu'un élément mâle complémentaire de cet élément femelle.

Un tel raccord, qui peut en pratique être de type quart de tour, est plus facile à utiliser et plus compact que ceux de l'état de la technique.

Selon des aspects avantageux mais non obligatoires de l'invention, un tel raccord rapide peut incorporer une ou plusieurs des caractéristiques suivantes :
- L'élément mâle comprend un deuxième corps centré sur un deuxième axe longitudinal et définissant un deuxième conduit de passage de fluide, une deuxième soupape comprenant un deuxième clapet logé dans le deuxième conduit de passage de fluide et mobile le long du deuxième axe longitudinal par rapport au deuxième corps, entre une position de fermeture de la deuxième soupape, en appui contre un siège de la deuxième soupape formé par le deuxième corps, et une position d'ouverture de la deuxième soupape, éloignée du siège, alors que le deuxième corps est pourvu d'au moins un relief d'immobilisation en rotation de la bague de sécurité, en cours d'emmanchement des éléments mâle et femelle et en configuration accouplée.
- Le deuxième corps comprend plusieurs reliefs en forme de créneaux radiaux disposés sur l'extérieur du corps.
- Le raccord comprend des moyens de visualisation de la position axiale de la bague de sécurité et du corps de l'élément femelle par rapport au deuxième corps de l'élément mâle, à travers la bague de manoeuvre.
- La bague dé manoeuvre est pourvue d'une lumière traversante dans laquelle est engagé l'organe de solidarisation en rotation et/ou l'organe de guidage en rotation, avec possibilité de déplacement de chaque organe engagé dans la lumière traversante en fonction de la position de la bague de sécurité et du corps de l'élément femelle par rapport au deuxième corps de l'élément mâle.
- La bague de manoeuvre de l'élément femelle comprend au moins un relief d'accrochage sur l'élément mâle, alors que l'élément mâle définit un volume de réception du relief d'accrochage de la bague de manoeuvre, avec possibilité de rotation relative de la bague de manoeuvre et de l'élément mâle autour de l'axe d'emmanchement.
- Lorsque la bague de sécurité est dans sa deuxième position et tant que la bague de manoeuvre n'a pas tourné autour de l'axe longitudinal du corps de l'élément femelle par rapport à la position angulaire vis-à-vis de la bague de sécurité lorsque la bague de sécurité est dans sa première position, la bague de sécurité constitue une butée au rapprochement de la bague de manoeuvre et de l'élément mâle.
- La bague de sécurité est pourvue d'au moins un relief d'immobilisation en rotation par rapport à l'élément mâle.
- La bague de sécurité est pourvue de plusieurs dents formant relief d'immobilisation, s'étendant axialement à partir d'un bord avant de la bague de sécurité et qui sont destinées à être engagées dans des espaces creux des créneaux radiaux de l'élément mâle.
- Le deuxième clapet est équipé d'un joint qui reçoit en appui la face avant du corps de l'élément femelle en configuration accouplée des éléments mâle et femelle.
- L'élément mâle comprend un poussoir central équipé d'une face plane affleurant une face avant plane d'un deuxième clapet de l'élément mâle lorsque ce deuxième clapet est en position de fermeture d'une deuxième soupape de l'élément mâle, ce poussoir central étant destiné à repousser le clapet de l'élément femelle en cours d'accouplement et en configuration accouplée des éléments mâle et femelle.

L'invention sera mieux comprise et d'autres avantages de celle-ci apparaîtront plus clairement à la lumière de la description qui va suivre de quatre modes de réalisation de l'invention, donnée uniquement à titre d'exemple et faite en référence aux dessins annexés dans lesquels :
- la figure 1 est une coupe longitudinale de principe d'un raccord rapide conforme à l'invention incorporant un élément femelle également conforme à l'invention ;
- la figure 2 est une vue de côté, dans le sens de la flèche Il à la figure 1 et à plus petite échelle, de l'élément femelle, avec visualisation d'une bague de sécurité en pointillés ;
- la figure 3 est une coupe analogue à la figure 1 lorsque les éléments mâle et femelle du raccord sont en cours d'accouplement ;
- la figure 4 est une vue de côté, à plus petite échelle et dans le sens de la flèche IV à la figure 3, des éléments du raccord ;
- la figure 5 est une coupe du raccord en configuration accouplée ;
- la figure 6 est une vue de côté, à plus petite échelle et dans le sens de la flèche VI à la figure 5, des éléments du raccord;
- la figure 7 est une vue en perspective des éléments mâle et femelle du raccord selon deux angles différents avec arrachement partiel de l'élément femelle ;
- la figure 8 est une vue développée partielle d'une bague de sécurité du raccord des figures 1 à 7 ;

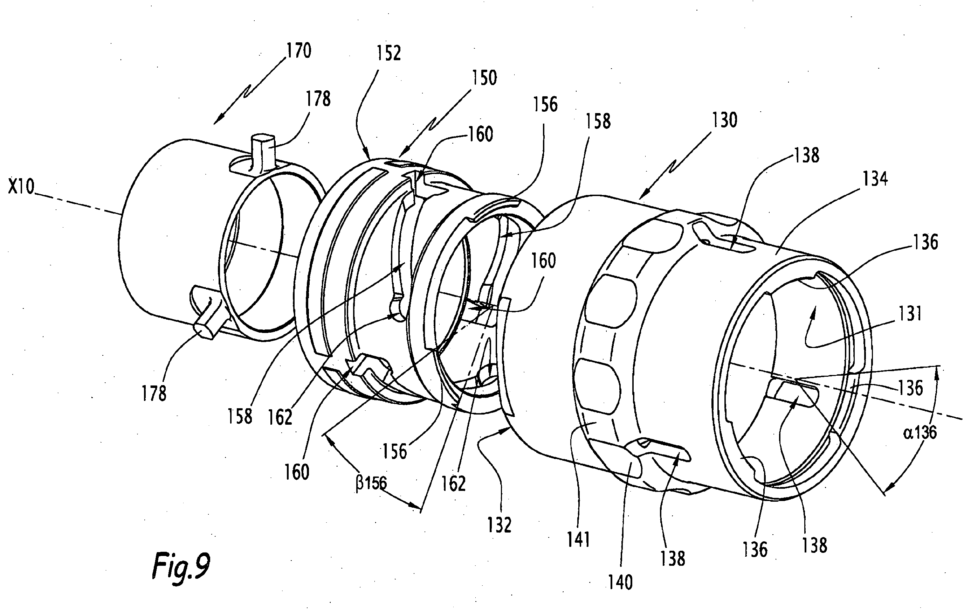

- la figure 9 est une vue en perspective éclatée de trois bagues appartenant à l'élément femelle représenté sur les figures 1 à 8 ;
- la figure 10 est une coupe partielle correspondant au détail X à la figure 1 pour un élément femelle et un raccord conformes à un deuxième mode de réalisation de l'invention ;
- la figure 11 est une coupe analogue à la figure 10 pour un élément de raccord et un raccord conformes à un troisième mode de réalisation de l'invention et
- la figure 12 est une coupe analogue à la figure 10 pour un élément de raccord et un raccord conformes à un quatrième mode de réalisation de l'invention.

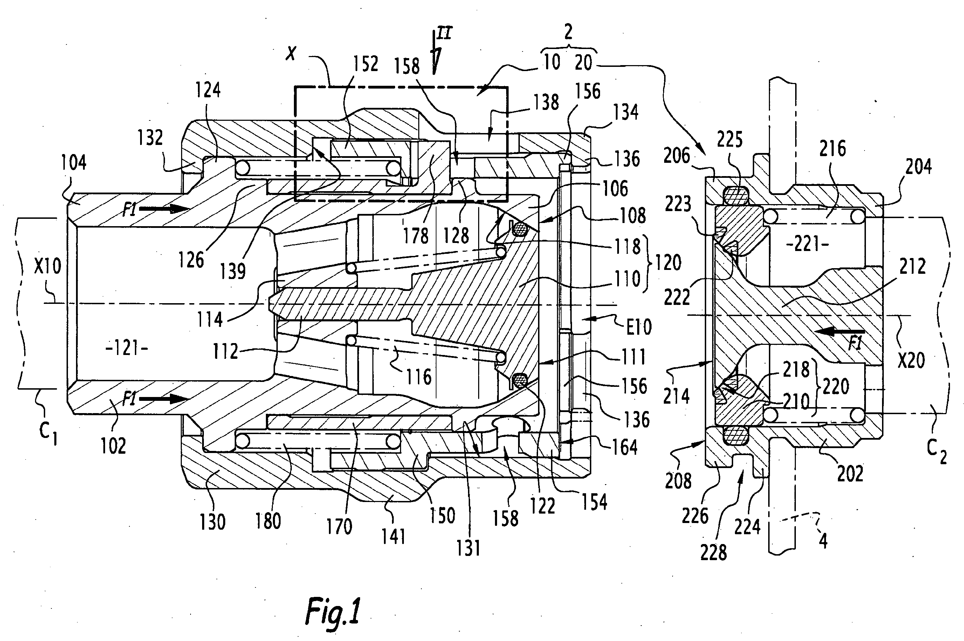

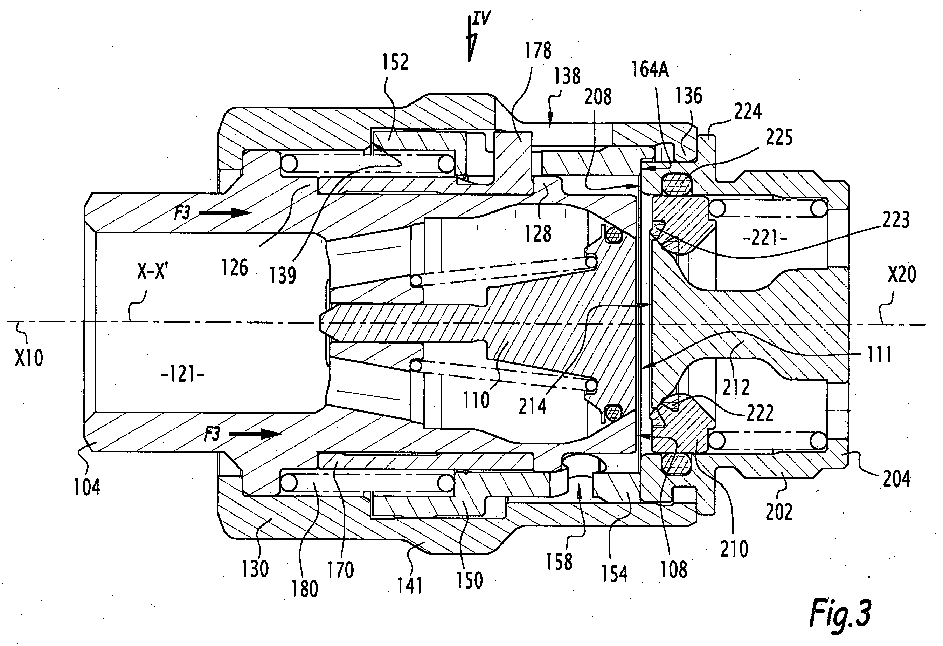

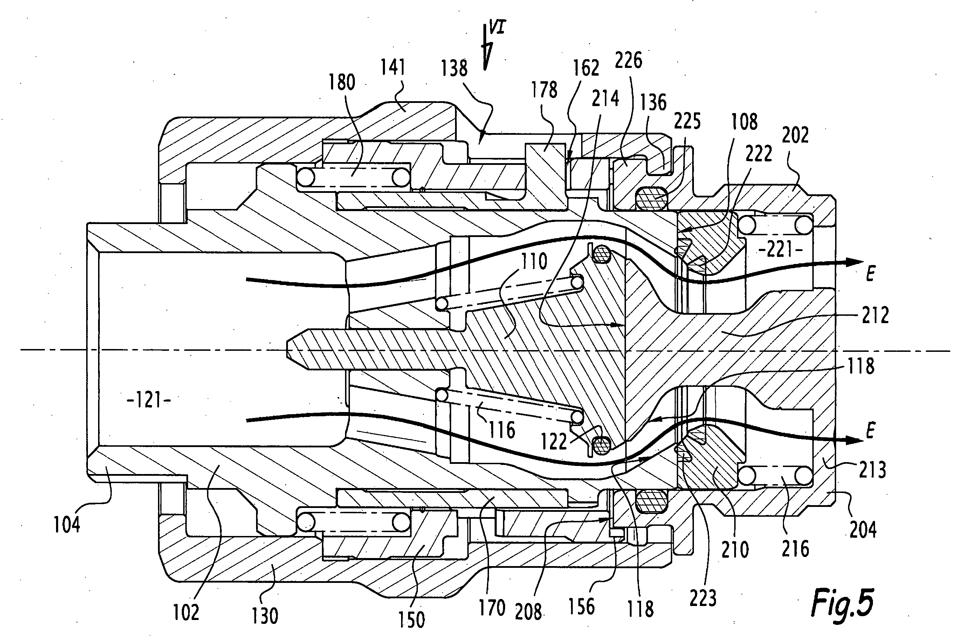

Le plan de coupe de la figure 5 est différent de celui des figures 1 et 3 car ces plans de coupe intersectent un pion 178 qui, dans la configuration de la figure 5, a une position angulaire différente de sa position dans la configuration des figures 1 et 3, autour d'un axe d'emmanchement X-X' des éléments du raccord.

Le raccord 2 représenté aux figures 1 à 8 comprend un élément femelle 10 et un élément mâle 20 raccordés respectivement à une canalisation amont C₁ et à une canalisation aval C₂. Pour la clarté du dessin, les canalisations C₁ et C₂ sont représentées, en traits mixtes, uniquement à la figure 1.

En variante, la canalisation C₂ peut être une canalisation amont pour le raccord 2, alors que la canalisation C₁ est une canalisation aval.

L'embout ou élément mâle 20 est destiné à être intégré à un véhicule, par exemple un véhicule automobile, en étant monté dans une cloison 4 de ce véhicule qui, pour la clarté du dessin également, n'est représenté qu'à la figure 1, en traits mixtes.

L'élément femelle 10 comprend un corps 102 qui est représenté monobloc sur les figures mais qui peut, en pratique, être formé de plusieurs parties assemblées par vissage ou par une autre technique.

On définit l'avant de l'élément femelle 10 comme le côté de cet élément femelle orienté à l'opposé de la canalisation Ci, c'est-à-dire en direction de l'élément mâle 20 lorsque les éléments du raccord 2 sont disposés l'un en face de l'autre en vue de leur accouplement comme représenté à la figure 1. Le corps 102 est donc pourvu d'une extrémité 104 proximale par rapport à la canalisation C₁ et d'une extrémité distale 106 qui définit une face avant plane et annulaire 108 du corps 102.

Un clapet 110 est logé à l'intérieur du corps 102 et monté coulissant dans celui-ci, le long de l'axe X10. Le clapet 110 est équipé d'une tige 112 engagée dans une douille de guidage 114 appartenant au corps 102 et qui permet de guider le clapet 110 en translation le long de l'axe X10. Le clapet 110 est chargé élastiquement par un ressort 116 en direction d'un siège 118 formé par une surface tronconique interne de l'extrémité distale 106 qui converge vers l'avant, c'est-à-dire en s'éloignant de l'extrémité 104. Le clapet 110 et le siège 118 forment ensemble une soupape 120 intégrée à l'élément femelle 10 et qui permet d'obturer sélectivement un conduit 121 d'écoulement du fluide à l'intérieur de l'élément femelle 10, de la canalisation C₁ vers l'élément mâle 20, en configuration accouplée des éléments 10 et 20.

Le clapet 110 est équipé d'un joint torique 122 destiné à venir en appui étanche contre le siège 118 en configuration de fermeture de la soupape 120 représentée aux figures 1 à 4 et 7. On note 111 la face avant du clapet 110 qui est plane. Cette face avant 111 est affleurante avec la face avant 108 lorsque le clapet 110 est en position de fermeture de la soupape 120.

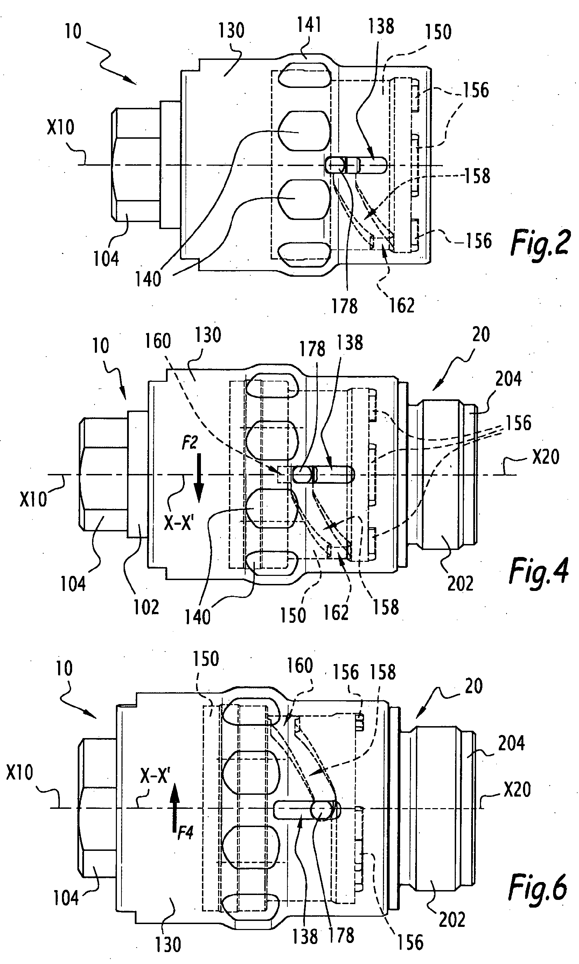

L'élément 10 comprend également une bague de manoeuvre 130 qui est montée radialement autour du corps 102 par rapport à l'axe X10. La bague de manoeuvre 130 définit une paroi intérieure 131 tournée vers l'axe X10 et comprend un bord arrière 132 rabattu vers l'axe X10 et qui vient en appui contre un talon périphérique externe 124 du corps 102 dans la configuration des figures 1 et 2. Ceci limite le mouvement de la bague 130 vers l'avant.

La bague 130 comprend également une extrémité avant 134 qui forme une embouchure E10 de réception partielle de l'élément mâle 20. Cette extrémité avant 134 est équipée de trois dents radiales internes 136 formées par des surépaisseurs radiales localisées de l'extrémité 134 et qui s'étendent chacune, sur un secteur angulaire α136 de l'ordre de 35°, en direction de l'axe X10. En pratque, la valeur de l'angle α136 peut être comprise entre 20° et 60° Les dents 136, sont régulièrement réparties autour de l'axe X10.

La bague 130 comprend trois lumières oblongues 138 dont la plus grande dimension est parallèle à l'axe X10 et qui sont régulièrement réparties autour de l'axe X10 et chacune alignées axialement avec une dent 136.

La bague 130 est équipée, sur sa surface radiale externe de cannelures 140 facilitant sa prise en main et l'application d'un couple sur cette bague. Ces cannelures sont ménagées dans une surépaisseur localisée 141 de la bague 130

L'élément femelle 10 comprend également une bague de sécurité 150 qui est logée, radialement par rapport à l'axe X10, entre le corps 102 et la bague 130. Cette bague de sécurité 150 s'étend entre un bord arrière 152 et un bord avant 154 équipé de trois dents axiales 156 qui s'étendent vers l'avant par rapport au bord 154, chacune sur un secteur angulaire d'angle au sommet β156 dont la valeur est égale à celle de l'angle α136. Ainsi, dans la configuration du raccord représenté aux figures 1, 2 et 7, les dents 136 et 156 peuvent être alignées les unes avec les autres, les dents 136 venant en recouvrement des dents 156 sur l'avant de l'élément 10. En d'autres termes, dans cette configuration, les dents 136 s'étendent, radialement depuis l'extérieur de la bague 150, jusque sur l'avant des dents 156.

On note 164 la face avant de la bague 150. Les dents 156 s'étendent au-delà de la face avant 164 par rapport au bord 154 de la partie principale de la bague 150. La face avant 164 présente une largeur radiale supérieure à la largeur radiale des dents 136. En d'autres termes, une partie radiale interne 164A de la face avant 164 est entourée localement par les dents 156.

La bague de sécurité 150 comprend également trois rainures hélicoïdales 158 qui sont transversales, c'est-à-dire qu'elles s'étendent radialement à travers toute l'épaisseur de la bague 150. Ces rainures sont régulièrement réparties autour de l'axe X10. Chaque rainure hélicoïdale s'étend entre une première encoche 160 et une deuxième encoche 162. Les encoches 160 et 162 sont respectivement alignées sur des axes X160 et X162 parallèles à l'axe X10.

L'élément femelle 10 comprend également une bague d'entraînement 170 intercalée, radialement par rapport à l'axe X10, entre le corps 102 et la bague de sécurité 150. La bague d'entraînement 170 est installée, sur le corps 102, entre un talon arrière 126 et un talon avant 128 appartenant au corps 102. La longueur axiale de l'espace défini entre les talons 126 et 128 pour la réception de la bague 170 est sensiblement égale, c'est-à-dire égale au jeu de fonctionnement près, à la longueur axiale de la bague 170. Ainsi, la bague 170 est immobilisée axialement le long du corps 102. Par ailleurs, cette bague 170 est montée avec possibilité de rotation autour du corps 102. La bague 170 est équipée de trois pions 178 régulièrement répartis autour de l'axe X10 et engagés chacun dans l'une des rainures 158 et dans l'une des lumières 138. Les pions 178 sont monoblocs avec la bague 170.

Un ressort 180 est intercalé axialement entre le talon 124 et la bague de sécurité 150 qu'il repousse élastiquement vers l'avant de l'élément 10.

Dans la configuration des figures 1, 2 et 7, les dents 156 de la bague de sécurité 150 transmettent l'effort de poussée élastique du ressort 180 aux dents 136 de la bague 130 contre lesquelles elles sont appui. La bague de manoeuvre 130 est ainsi également poussée vers l'avant, jusqu'à ce que son bord arrière 132 vienne en appui contre le talon 124.

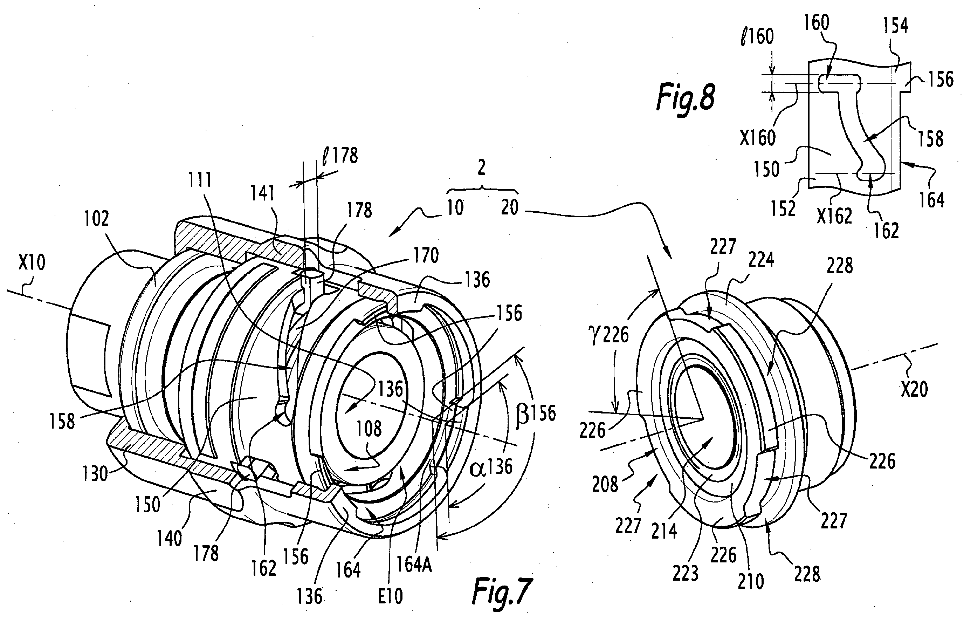

On définit l'avant de l'élément mâle comme le côté de cet élément tourné vers l'élément femelle dans la configuration des figures 1 et 7.

L'élément mâle 20 comprend un corps 202 centré sur un axe X20 et qui s'étend entre une extrémité 204 proximale par rapport à la canalisation C₂ et une extrémité distale 206. L'extrémité distale 206 définit une face avant plane 208 qui entoure radialement un clapet 210, lequel entoure lui-même un poussoir 212 solidaire du corps 202 et centré sur l'axe X20. Le poussoir 212 est monté dans le corps 202 par vissage ou une autre technique. Il est relié à un corps 202 par des pattes dont une est visible dans le plan de coupe de la figure 5, avec la référence 213.

Un ressort 216 charge élastiquement le clapet 210 en direction d'un siège 218 formé par le poussoir 212 et qui se présente sous la forme d'une surface tronconique centrée sur l'axe X20 et divergente vers l'avant de l'élément 20. Le clapet 210 et le poussoir 212 forment ainsi une soupape 220 permettant d'obturer sélectivement un conduit 221 d'écoulement du fluide à l'intérieur du corps 202.

Le clapet 210 est équipé d'un joint 222 destiné à venir en appui contre le siège 218 en configuration de fermeture de la soupape 220.

Par ailleurs, le clapet 220 est équipé d'un deuxième joint 223 destiné à recevoir en appui la face avant 108 du corps 102 en configuration accouplée des éléments 10 et 20.

Le corps 202 est équipé d'une collerette périphérique externe 224 qui est ménagés sur l'extérieur du corps 202 et entoure celui-ci sur toute sa périphérie.

Au voisinage de l'extrémité 206, le corps 202 est pourvu d'une gorge sphérique interne dans laquelle est reçu un joint torique d'étanchéité 225.

Le corps 202 comprend trois dents radiales externes 226 régulièrement réparties autour de l'axe X20 et qui s'étendent, au niveau de l'extrémité distale 206, radialement vers l'extérieur du corps 202. Chacune de ces dents s'étend sur un secteur angulaire dont l'angle au sommet γ226 est de l'ordre de 60°. Ainsi, entre chaque paire de deux dents 226 adjacentes, il est défini une zone 227 de rayon extérieur plus faible que le rayon extérieur des dents 226. Il est ainsi formé une structure en créneaux radiaux 226, 227 autour de la face avant 208 du corps 202.

Les dimensions respectives des dents 136 et 156, d'une part, et 226, d'autre part, sont choisies pour que les dents 136 et 156 puissent être insérées dans les zones 227 qui constituent ainsi des zones de réception pour ces dents 136 et 156.

Une portion d'une gorge 228 est définie entre chacune des dents 226 et la collerette 224. En d'autres termes, une gorge périphérique 228 s'étend autour du corps 202 entre les dents 226 et la collerette 224, cette gorge 228 étant interrompue au niveau des zones 227 de réception des dents 136 et 156.

En configuration découplée du raccord représenté aux figures 1, 2 et 7, les clapets 110 et 210 sont respectivement repoussés contre les sièges 118 et 218. Par ailleurs, le ressort 180 repousse les bagues 150 et 130 vers l'avant de l'élément 10 et les pions 178 sont engagés dans les premières encoches 160 des rainures 100.

Dans cette configuration, les pions 178 solidarisent en rotation les bagues 150 et 170 puisque les encoches 160 ont une largeur ℓ160, mesurée selon une direction orthoradiale par rapport à l'axe X10, qui est égale, au jeu près, à la largeur ℓ178 des pions 178 mesurée également selon une direction orthoradiale. Par ailleurs, comme les pions 178 sont engagés dans les lumières 138 et comme la largeur des lumières est sensiblement égale à la largeur ℓ178, les bagues 170 et 130 sont également solidaires en rotation.

Lorsqu'on approche les éléments 10 et 20 l'un de l'autre pour les accoupler, on parvient dans la configuration des figures 3 et 4 où les dents 136 et 156 des bagues 130 et 150 sont engagées dans les zones 227 de l'élément mâle 20. Cet engagement a lieu grâce à un mouvement essentiellement axial des éléments 10 et 20 l'un vers l'autre, le long d'un axe d'emmanchement X-X' qui est commun aux éléments 10 et 20 du raccord et sur lequel sont alignés les axes X10 et X20. Ce mouvement est représenté par les flèches F1 à la figure 1.

En pratique, les dents 136 traversent les zones 227 pour parvenir au-delà des dents 226 par rapport à la face avant 208. Les dents 156 demeurent engagées dans les zones de réception 227. Tant que les dents 156 demeurent dans les zones de réception 227, c'est-à-dire dans les configurations des figures 3 à 6 et dans les configurations intermédiaires, la bague 150 est immobilisée en rotation, autour de l'axe X-X', par rapport au corps 202.

Dans la configuration de la figure 3, la face avant 164 de la bague 150 est en appui, par sa partie 164A contre la face avant 208 du corps 202. Ceci a pour effet de repousser la bague 150 à l'intérieur de la bague de manoeuvre 130, autour du corps 102 et à l'encontre de l'action du ressort 180, ce qui est visible à la figure 3 par le rapprochement du bord arrière 152 de la bague 150 vis-à-vis d'un épaulement interne 139 de la bague 130 et par le rapprochement du bord 154 et de la surface 108.

Ce déplacement axial de la bague de sécurité 150 par rapport à la bague de manoeuvre 130 et au corps 102 a pour effet de déplacer également cette bague de sécurité par rapport à la bague d'entraînement 170, au point que les pions 178 sortent des encoches 160 et sont engagés dans les rainures hélicoïdales 158. En d'autres termes, dans cette position des figures 3 et 4, les pions 178 peuvent coulisser dans les rainures hélicoïdales 158 sans être bloqués en rotation.

On remarque que, dans cette position, la face avant 108 du corps 102 n'est pas en contact avec l'élément mâle 20 et que la face avant 214 du poussoir 212 n'est pas en contact avec le clapet 110. Ainsi, dans cette position, les soupapes 120 et 220 sont en configuration de fermeture des conduits internes 121 et 221 des éléments 10 et 20.

Dans cette position, les dents 136 entourent et centrent la face avant 208 sur la surface 164A, ce qui garantit un bon alignement des axes X10 et X20 sur l'axe X-X'.

En outre, le corps 102 peut être considéré, aux jeux de fonctionnement près, comme centré sur l'axe X10. Ainsi, la surface 108 est normalement centrée sur la face avant du clapet 210 et, au terme de l'accouplement des éléments 10 et 20, le joint 223 travaille uniquement en compression.

L'opérateur est conscient que cette position a été atteinte car l'effort élastique dû au ressort 180 est perceptible en manipulant l'élément 10, lors du recul de la bague 150 par rapport aux bagues 130 et 170.

A partir de cette configuration, il est possible à l'opérateur d'exercer un couple autour de l'axe X-X', dans le sens de la flèche F2 à la figure 4, ce qui a pour effet de faire progresser les pions 178 dans les gorges 158 en direction des encoches 162. Ceci a également pour effet de faire tourner les dents 136 par rapport au corps 202 et d'engager ces dents dans les portions de la gorge 228, c'est-à-dire à l'arrière des dents 226 par rapport à la face avant 208. L'engagement des dents 136 dans les portions de gorge 228 couplé au centrage radial des dents 226 sur la paroi 131 intérieure de la bague de manoeuvre 130 garantit un bon alignement des axes X10 et X20 sur l'axe X-X', en phase d'accouplement et en configuration accouplée, afin de maintenir le joint 223 en contact avec la face avant 108 du corps 102. En progressant dans les rainures 158 vers les encoches 162, les pions se déplacent vers l'avant de l'élément 10 et entraînent avec eux le reste de la bague 170 et, par là même, le corps 102 qui avance axialement en direction du corps 202 par rapport à la bague 130, comme représenté par les flèches F3 à la figure 3. Grâce à ce mouvement, la face avant 108 repousse le clapet 210, alors que le clapet 110 vient en appui contre le poussoir 212 et est repoussé par celui-ci, pour atteindre la configuration des figures 5 et 6 où les éléments 10 et 20 sont accouplés et les soupapes 120 et 220 ouvertes, ce qui permet l'écoulement de fluide comme représenté par les flèches E sur cette figure. Dans cette configuration, la face avant 108 repose contre le joint 223 qui travaille en compression uniquement et qui assure une fonction d'étanchéité, entre, d'une part, le volume de circulation du fluide formé par les conduits 121 et 221 et, d'autre part, l'extérieur du raccord 2. Le joint 225 est alors en appui contre la surface radiale externe de l'extrémité 106 et assure également une fonction d'étanchéité.

Dans cette configuration, les pions 178 sont parvenus dans les encoches 162 des rainures 158 où ils sont verrouillés en rotation grâce à l'effort élastique généré par le ressort 180.

Ainsi, le verrouillage des éléments mâle et femelle l'un sur l'autre a lieu au moyen d'une rotation de la bague de manoeuvre 130 par rapport à la bague 150 , sur une plage angulaire correspondant au déplacement des pions 178 le long des rainures 158. Cette plage angulaire vaut environ 90°. C'est pourquoi, e raccord 2 peut être qualifié de raccord quart de tour.

Comme on le remarque à la comparaison des figures 4 et 6, la progression axiale du corps 102 en direction du corps 202 peut être repérée par l'opérateur grâce au déplacement des pions 178 dans les lumières 138. Ces lumières et ces pions permettent donc de visualiser la position de la bague de sécurité 150 et du corps 102 par rapport au corps 202 et à la bague de manoeuvre 130, à travers cette bague.

On comprend que la manipulation du raccord 2 pour l'accouplement des éléments 10 et 20 est particulièrement aisée, alors que ces éléments sont compacts, en particulier selon leurs dimensions axiales respectives. La séquence d'accouplement garantit un positionnement et une orientation axiale correcte des éléments mâle et femelle, par la coopération des dents 136, 156 et 226, ce qui permet de déclencher de manière sécurisée et étanche l'ouverture des soupapes 110 et 210, avec des courses axiales courtes. Les formes des bagues 130 et 150 et la géométrie du corps 202 guident naturellement l'opérateur pour faciliter la manoeuvre d'accouplement. Il est remarquable que la position verrouillée des éléments mâle et femelle du raccord est assurée avant l'ouverture des soupapes 110 et 210 qui a lieu dans un même mouvement par rotation de la bague de manoeuvre, cette rotation correspondant également au verrouillage effectif de cette bague de manoeuvre sur l'élément mâle, par engagement de ces dents 136 dans les portions de la gorge 228.

On remarque également que, dans la configuration de la figure 3, l'écoulement E du fluide n'est pas gêné par des moyens de guidage des clapets 110 et 210. En d'autres termes, la veine fluide est peu obturée, ce qui facilite l'écoulement du fluide en configuration accouplée.

Par ailleurs, l'élément mâle 20, qui est généralement monté sur un véhicule automobile dans le cas d'un système d'alimentation d'un tel véhicule, est le plus simple des éléments du raccord. Il peut être produit en un grand nombre d'exemplaires, donc à moindre coût. Comme le poussoir central 212 est fixe par rapport au corps 202, l'intrusion mal intentionnée d'un outil dans le circuit auquel appartient la canalisation C₂ est limitée, voire rendue impossible.

Par ailleurs, le corps 102 est libre en rotation par rapport aux bagues 130, 150 et 170. Ainsi, si un couple est exercé par la canalisation C₁ sur le corps 102, par exemple dans le cas où cette canalisation est souple et partiellement enroulée, ceci n'a pas d'influence négative sur la manoeuvre du raccord 2 lors des phases d'accouplement et de désaccouplement.

Pour le désaccouplement, il suffit à l'opérateur d'exercer sur la bague 130 un couple F4 de sens opposé au couple F2 pour éjecter axialement les pions 178 des encoches 162 puis faire progresser ces pions dans les rainures 158, jusqu'à atteindre la configuration des figures 3 et 4. Il suffit alors de tirer axialement sur les embouts 10 et 20 pour les séparer l'un de l'autre, avec l'assistance du ressort 180, ce qui engage à nouveau les pions 178 dans les encoches 160.

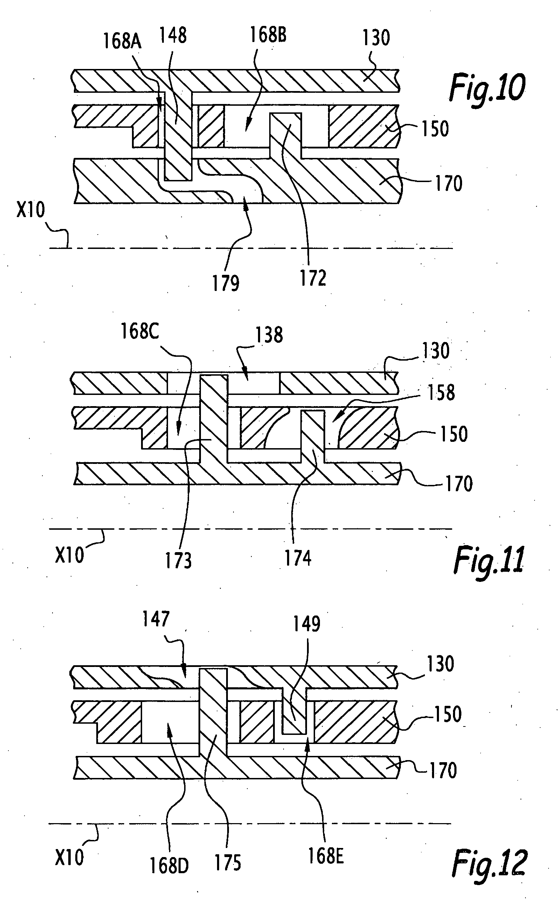

Dans les deuxième, troisième et quatrième modes de réalisation de l'invention représentés aux figures 10 à 12, les éléments analogues à ceux du premier mode de réalisation portent les mêmes références. Dans ce qui suit, on ne décrit que ce qui distingue ces modes de réalisation du premier. Ces modes présentent des moyens de transformation alternatifs, lorsque la bague de sécurité 150 est dans sa deuxième position, d'un mouvement de rotation de la bague de manoeuvre 130 autour de l'axe longitudinal X10 et par rapport à la bague de sécurité 150, en un mouvement de translation axiale du corps 102 par rapport à la bague de manoeuvre 130.

Dans le deuxième mode de réalisation de la figure 10, des pions de verrouillage 148 sont prévus sur la bague de manoeuvre 130 et s'étendent chacun, à travers une ouverture 168A en L ménagée dans la bague de sécurité 150, jusque dans une rainure hélicoïdale 179 ménagée dans la bague d'entraînement 170 qui est immobilisée par rapport au corps 102 de l'élément femelle axialement, tout en étant libre en rotation. L'ouverture 168A a une branche parallèle à l'axe X10 et une branche qui s'étend selon une direction orthoradiale par rapport à cet axe. Par ailleurs, un pion 172 monobloc avec la bague 170 est engagé dans une rainure longitudinale 168B de la bague de sécurité 150, ce qui assure une solidarisation en rotation des bagues 150 et 170, tout en permettant un déplacement axial relatif de ces bagues.

Dans le troisième mode de réalisation de la figure 11, la bague d'entraînement 170 est pourvue de deux pions 173 et 174. Le premier pion 173 traverse un évidement 168C de la bague de sécurité 150 et s'engage dans une lumière longitudinale 138 de la bague de manoeuvre 130. Par ailleurs, le deuxième pion 174 de la bague d'entraînement 170 est engagé dans une rainure hélicoïdale 158 de la bague de sécurité 150.

En variante, l'évidement 168C peut être remplacé par une rainure hélicoïdale.

Dans le quatrième mode de réalisation de la figure 12, la bague d'entraînement 170 est pourvue d'un pion 175 qui traverse une rainure longitudinale 168D de la bague de sécurité 150 et s'engage dans une rainure hélicoïdale 147 de la bague de manoeuvre 130. Par ailleurs, cette bague de manoeuvre 130 est équipée d'un pion 149 qui est engagé dans une rainure annulaire 168E de la bague de sécurité 150.

Dans les deuxième à quatrième modes de réalisation, deux organes en saillie 148 et 172, 173 et 174, 149 et 175 sont prévus. Ils peuvent être disposés dans n'importe quel ordre par rapport à l'embouchure E10 de l'élément femelle. En d'autres termes, la position droite/gauche de ces éléments sur les figures 10 à 12 pourrait être inversée.

Les fonctionnements de ces modes de réalisation sont comparables à ceux du premier mode de réalisation.

Quel que soit le mode de réalisation, le nombre de pions 178 ou équivalents peut être différent de trois. De préférence, au moins deux pions sont prévus pour coopérer avec au moins deux rainures hélicoïdales afin d'entraîner le corps de l'élément femelle en translation axiale. Toutefois, une version avec un seul pion 178 ou équivalent est envisageable.

De même, le nombre de dents de la bague de manoeuvre et de la bague de sécurité peut être différent de trois. Il est avantageusement supérieur ou égal à deux.

Le nombre de dents de l'élément mâle peut également être différent de trois, de préférence supérieur ou égal à deux.

Quel que soit le mode de réalisation, des solutions miroirs sont envisageables pour le positionnement des organes de solidarisation en rotation et de guidage dans le mouvement hélicoïdal, d'une part, et des gorges associées, d'autre part. En d'autres termes, ces organes et gorges peuvent, au choix, être disposés sur une bague interne ou externe de l'élément femelle 10.

On remarque que les dents 136, 156 et 226 ont plusieurs fonctions à savoir :
- une fonction de détrompage pour aider à l'alignement axial des éléments mâle et femelle 10 et 20 en vue de leur accouplement ;
- une fonction de centrage pour maintenir l'alignement des éléments mâle et femelle en phase d'accouplement et en position accouplée ;
- une fonction d'accouplement de l'élément mâle 20 avec la bague de sécurité 150 ;
- une fonction de poussée de la bague de sécurité 150 par rapport à la bague de manoeuvre 130 ;

La bague d'entraînement 130 est montée glissante entre deux épaulements autour du corps 102 afin de ne pas l'emmener en rotation dans son mouvement hélicoïdal et limiter la torsion d'éléments de raccordement à l'arrière du corps. Selon une variante non représentée de l'invention, la bague d'entraînement 130 peut être solidaire du corps 102. Le corps 102 est alors emmené vers l'avant lors de l'accouplement des éléments 10 et 20, avec un mouvement hélicoïdal. Dans ce cas, on peut prévoir un élément de connexion tournant au niveau de l'extrémité proximale 104 du corps 102 pour permettre le raccordement d'une canalisation C₁ flexible, non soumise au mouvement de rotation du corps 102.

Selon des variantes non représentées de l'invention, les pions 178 et équivalents peuvent être remplacés par des galets ou des pièces rapportées, par exemple vissées, sur l'une ou l'autre des bagues.

Les fonctions de détrompage et de centrage assurées par les dents 136, 156 et 226 pourraient être assurées par d'autres moyens. D'autres formes de dents sont également envisageables.

L'invention est applicable dans des domaines autres que l'industrie automobile, notamment pour l'alimentation de rames de train ou d'aéronefs pour lesquels il est prévu un élément de raccord mâle court monté directement sur la cloison d'un réservoir.

Les modes de réalisation des variantes envisagées ci-dessus peuvent être combinés entre eux pour générer de nouveaux modes de réalisation de l'invention.

## Revendications

1. Elément femelle (10) de raccord rapide (2) destiné à coopérer, par emmanchement (F1, F3) le long d'un axe d'emmanchement (X-X'), avec un élément mâle (20) de raccord rapide et comprenant :
- un corps (102) centré sur un axe longitudinal (X10), définissant un conduit (121) de passage de fluide et comportant, à son extrémité distale (106), une face avant plane (108),
- une soupape (120) comprenant un clapet (110) logé dans le conduit de passage de fluide et mobile le long de l'axe longitudinal par rapport au corps, entre une position de fermeture de la soupape, en appui contre un siège (118) de la soupape, et une position d'ouverture de la soupape, éloignée du siège,
- une bague de manoeuvre (130) montée coulissante autour du corps et définissant, à son extrémité distale (134), une embouchure (E10) de réception de l'élément mâle, la bague étant équipée d'au moins un relief (136) d'engagement avec un relief correspondant (226) de l'élément mâle,
**caractérisé en ce que** l'élément femelle de raccord comprend en outre
- une bague de sécurité (150) montée autour du corps (102), radialement à l'intérieur de la bague de manoeuvre (130), la bague de sécurité étant mobile axialement par rapport au corps entre une première position (Fig 1), dans laquelle la bague de manoeuvre et la bague de sécurité sont solidaires en rotation autour de l'axe longitudinal (X₁₀), et une deuxième position (Fig 3) dans laquelle la bague de manoeuvre (130) peut tourner autour de l'axe longitudinal par rapport à la bague de sécurité,
- des moyens (170, 158; 130, 179 ; 170, 158; 170, 147) de transformation, lorsque la bague de sécurité (150) est dans sa deuxième position, d'un mouvement de rotation (F₂, F₄) de la bague de manoeuvre autour de l'axe longitudinal et par rapport à la bague de sécurité, en un mouvement de translation axiale (F₃) du corps (102) par rapport à la bague de manoeuvre (130).

2. Elément femelle selon la revendication 1, **caractérisé en ce que** les moyens de transformation de mouvement comprennent une bague d'entraînement (170) montée mobile en rotation et solidaire en translation autour du corps (102), **en ce qu'**une (170) des bagues, parmi la bague de manoeuvre (130) et la bague d'entraînement (170), est équipée d'au moins un organe (178 ; 173) de solidarisation en rotation de la bague d'entraînement avec la bague de manoeuvre, avec possibilité de mouvement axial relatif, et **en ce qu'**une des bagues (170 ; 150) parmi la bague d'entraînement et la bague de sécurité (150) est équipée d'au moins un organe (178 ; 174) de guidage de la bague d'entraînement (170) dans un mouvement hélicoïdal par rapport à la bague de sécurité (150).

3. Elément femelle selon la revendication 1, **caractérisé en ce que** les moyens de transformation de mouvement comprennent une bague d'entraînement (170) montée mobile en rotation et solidaire en translation autour du corps (102), **en ce qu'**une (170) des bagues, parmi la bague de sécurité (150) et la bague d'entraînement (170), est équipée d'au moins un organe (172; 175) de solidarisation en rotation de la bague d'entraînement avec la bague de sécurité avec possibilité de mouvement relatif, et **en ce qu'**une des bagues (170 ; 130) parmi la bague d'entraînement (170) et la bague de manoeuvre (130) est équipée d'au moins un organe (148 ; 175) de guidage de la bague d'entraînement (170) dans un mouvement hélicoïdal par rapport à la bague de manoeuvre (130).

4. Elément femelle selon l'une des revendications 2 ou 3, **caractérisé en ce que** l'organe de solidarisation en rotation (178 ; 173 ; 175) et l'organe de guidage (178 ; 174 ; 175) sont solidaires ou monoblocs avec la même bague (170).

5. Elément femelle selon la revendication 4, **caractérisé en ce que** l'organe de solidarisation en rotation et l'organe de guidage sont confondus en un même organe (178 ; 175).

6. Elément femelle selon l'une des revendications 2 à 3, **caractérisé en ce que** l'organe de solidarisation en rotation et l'organe de guidage sont deux organes distincts (148, 172 ; 173, 174).

7. Elément femelle selon la revendication 6, **caractérisé en ce que** l'organe de solidarisation en rotation (172) et l'organe (148) de guidage sont solidaires ou monoblocs avec deux bagues distinctes (130, 170) parmi la bague de manoeuvre (130), la bague de sécurité (150) et la bague d'entraînement (170).

8. Elément femelle selon l'une des revendications 2 à 7, **caractérisé en ce que** l'organe de solidarisation en rotation est un pion (178; 172; 173 ; 175) solidaire ou monobloc avec une (170) des bagues et engagé dans une rainure (138 ; 168B ; 168D) au moins en partie longitudinale d'une autre (130 ; 150) des bagues, parallèle à l'axe longitudinal du corps, et l'organe de guidage est un pion (178 ; 148 ; 174 ; 175) solidaire ou monobloc avec l'une (170 ; 130) des bagues et engagé dans une rainure hélicoïdale (158 ; 179 ; 158 ; 147) d'une autre (150 ; 170 ; 130) des bagues.

9. Elément femelle selon les revendications 5 et 8, **caractérisé en ce que** dans la première position de la bague de sécurité, le pion (178) de solidarisation en rotation et de guidage est engagé dans une encoche (160) qui prolonge la rainure hélicoïdale (158) et qui s'étend (X160) parallèlement à l'axe longitudinal (X10) du corps.

10. Elément femelle selon l'une des revendications précédentes, **caractérisé en ce qu'**il comprend des moyens (180) de rappel élastique de la bague de sécurité (150) vers sa première position.

11. Elément femelle selon l'une des revendications précédentes, **caractérisé en ce que**, lorsque la bague de sécurité (150) est dans sa deuxième position (Fig. 3) et tant que la bague de manoeuvre (130) n'a pas tourné autour de l'axe longitudinal (X10) par rapport à sa position angulaire vis-à-vis de la bague de sécurité lorsque la bague de sécurité est dans sa première position (Figure 1), une extrémité distale (154) de la bague de sécurité fait saillie au-delà de la face (108) avant du corps (102).

12. Elément femelle selon l'une des revendications précédentes, **caractérisé en ce que** le clapet (110) est pourvu d'une face avant plane (111) affleurante avec la face avant plane (108) du corps (102) lorsque le clapet est en position de fermeture de la soupape (110).

13. Raccord rapide (2) pour la jonction de deux canalisations (C₁, C₂) de fluide, **caractérisé en ce qu'**il comprend un élément femelle (10) selon l'une des revendications précédentes et un élément mâle (20) complémentaire de cet élément femelle.

14. Raccord selon la revendication 13, **caractérisé**
- **en ce que** l'élément mâle comprend :
- un deuxième corps (202) centré sur un deuxième axe longitudinal (X20) et définissant un deuxième conduit (221) de passage de fluide,
- une deuxième soupape (220) comprenant un deuxième clapet (210) logé dans le deuxième conduit de passage de fluide et mobile le long du deuxième axe longitudinal par rapport au deuxième corps, entre une position de fermeture de la deuxième soupape, en appui contre un siège (218) de la deuxième soupape formé par le deuxième corps, et une position d'ouverture de la deuxième soupape, éloignée du siège,
- et **en ce que** le deuxième corps est pourvu d'au moins un relief (226, 227) d'immobilisation en rotation de la bague de sécurité (150), en cours d'emmanchement (F1, F3) des éléments mâle et femelle et en configuration accouplée.

15. Raccord selon l'une des revendications 13 à 14, **caractérisé en ce que**, lorsque la bague de sécurité (150) est dans sa deuxième position (Fig 3) et tant que la bague de manoeuvre n'a pas tourné autour de l'axe longitudinal (X10) du corps (102) de l'élément femelle (10) par rapport à la position angulaire vis-à-vis de la bague de sécurité lorsque la bague de sécurité (150) est dans sa première position (Fig. 1), la bague de sécurité constitue une butée au rapprochement (F3) de la bague de manoeuvre et de l'élément mâle.

## Patentansprüche

1. Aufnahmeelement (10) einer 5chnellkupplung (2), das vorgesehen ist, durch Zusammenfügen (F1, F3) mit einem Einsteckelement (20) der Schnellkupplung gemäß einer Eingreifachse (X-X') zusammenzuarbeiten, und das umfasst:
- einen zu einer Längsachse (X10) zentrierten Körper (102), der einen Kanal (121) für den Durchgang eines Fluids begrenzt und an seinem distalen Ende (106) eine ebene Stirnfläche (108) aufweist,
- ein Ventil (120), das einen Ventilkörper (110) umfasst, der in dem Kanal für den Durchgang eines Fluids aufgenommen ist und entlang der Längsachse in Bezug auf den Körper zwischen einer Verschlussposition des Ventils in Auflage gegen einen Ventilsitz (118) und einer Offenposition des Ventils entfernt vom Sitz beweglich ist,
- einen Handhabungsring (130), der gleitend um den Körper herum montiert ist und an seinem distalen Ende (134) eine Einmündung (E10) zur Aufnahme des Einsteckelements begrenzt, wobei der Ring mit mindestens einem Relief (136) zum Eingreifen in ein korrespondierendes Relief (226) des Einsteckelements ausgerüstet ist,
**dadurch gekennzeichnet, dass** das Aufnahmeelement der Kupplung außerdem umfasst
- einen Sicherungsring (150), der um den Körper (102) herum radial im Inneren des Handhabungsrings (130) montiert ist, wobei der Sicherungsring in Bezug auf den Körper zwischen einer ersten Position (Fig. 1), in der der Handhabungsring und der Sicherungsring drehfest zur Längsachse (X₁₀) verbunden sind, und einer zweiten Position (Fig. 3), in der der Handhabungsring (130) sich in Bezug auf den Sicherungsring um die Längsachse drehen kann, axial beweglich ist,
- Mittel (170, 158; 130, 179; 170, 158; 170, 147) zur Umwandlung einer Drehbewegung (F₂, F₄) des Handhabungsrings um die Längsachse und in Bezug auf den Sicherungsring in eine axiale Längsbewegung (F₃) des Körpers (102) in Bezug auf den Handhabungsring (130), wenn der Sicherungsring (150) in seiner zweiten Position ist.

2. Aufnahmeelement nach Anspruch 1, **dadurch gekennzeichnet, dass** die Mittel zur Umwandlung der Bewegung einen Antriebsring (170) umfassen, der hinsichtlich der Drehung um den Körper (102) beweglich ist und in Längsbewegung fest ist, dass einer der Ringe (170), ausgewählt aus dem Handhabungsring (130) und dem Antriebsring (170), mit mindestens einem Element (178; 173) zur drehfesten Verbindung des Antriebsrings mit dem Handhabungsring mit der Möglichkeit einer relativen axialen Bewegung ausgerüstet ist und dass einer der Ringe (170; 150), ausgewählt aus dem Antriebsring und dem Sicherungsring (150), mit mindestens einem Element (178; 174) zur Führung des Antriebsrings (170) in einer schraubenförmigen Bewegung in Bezug auf den Sicherungsring (150) ausgerüstet ist.

3. Aufnahmeelement nach Anspruch 1, **dadurch gekennzeichnet, dass** die Mittel zur Umwandlung der Bewegung einen Antriebsring (170) umfassen, der hinsichtlich der Drehung um den Körper (102) beweglich ist und in Längsbewegung fest ist, dass einer der Ringe (170), ausgewählt aus dem Sicherungsring (150) und dem Antriebsring (170), mit mindestens einem Element (172; 175) zur drehfesten Verbindung des Antriebsrings mit dem Sicherungsring mit der Möglichkeit einer relativen Bewegung ausgerüstet ist und dass einer der Ringe (170; 130), ausgewählt aus dem Antriebsring (170) und dem Handhabungsring (130) mit mindestens einem Element (148; 175) zur Führung des Antriebsrings (170) in einer schraubenförmigen Bewegung in Bezug auf den Handhabungsring (130) ausgerüstet ist.

4. Aufnahmeelement nach einem der Ansprüche 2 oder 3, **dadurch gekennzeichnet, dass** das Element (178; 173; 175) zur drehfesten Verbindung und das Element (178; 174; 175) zur Führung mit demselben Ring (170) verbunden oder einstückig ausgebildet sind.

5. Aufnahmeelement nach Anspruch 4, **dadurch gekennzeichnet, dass** das Element zur drehfesten Verbindung und das Element zur Führung in einem selben Element (178; 175) zusammengenommen sind.

6. Aufnahmeelement nach einem der Ansprüche 2 bis 3, **dadurch gekennzeichnet, dass** das Element zur drehfesten Verbindung und das Element zur Führung zwei getrennte Elemente (148; 172; 173,174) sind.

7. Aufnahmeelement nach Anspruch 6, **dadurch gekennzeichnet, dass** das Element (172) zur drehfesten Verbindung und das Führungselement (148) mit zwei unterschiedlichen Ringen (130,170), ausgewählt aus dem Handhabungsring (130), dem Sicherungsring (150) und dem Antriebsring (170), verbunden oder einstückig ausgebildet sind.

8. Aufnahmeelement nach einem der Ansprüche 2 bis 7, **dadurch gekennzeichnet, dass** das Element zur drehfesten Verbindung ein Ansatz (178; 172; 173; 175) ist, der mit einem (170) der Ringe verbunden oder einstückig ausgebildet ist und in eine Nut (138; 168B; 168D), die zumindest teilweise in längsrichtung sich erstreckt, eines anderen (130; 150) der Ringe parallel zur Längsachse des Körpers eingreift und das Führungselement ein Ansatz (178; 148; 174; 175) ist, der mit einem (170; 130) der Ringe verbunden ist oder einstückig mit diesem ausgebildet ist und in eine schraubenförmige Nut (158; 179; 158; 147) des anderen (150; 170; 130) der Ringe eingreift.

9. Aufnahmeelement nach den Ansprüchen 5 und 8, **dadurch gekennzeichnet, dass** in der ersten Position des Sicherungsrings der Ansatz (178) zur drehfesten Verbindung und zur Führung in eine Ausnehmung (160) eingreift, die die schraubenförmige Nut (158) verlängert und die sich parallel zur Längsachse (X10) des Körpers erstreckt.

10. Aufnahmeelement nach einem der vorhergehenden Ansprüche,
**dadurch gekennzeichnet, dass** es Mittel (180) zur elastischen Rückstellung des Sicherungsrings (150) in seine erste Position umfasst.

11. Aufnahmeelement nach einem der vorhergehenden Ansprüche, **dadurch gekennzeichnet, dass**, wenn der Sicherungsring (150) in seiner zweiten Position (Figur 3) ist und solange der Handhabungsring (130) sich nicht um die Längsachse (X10) in Bezug auf seine Winkelposition gegenüber dem Sicherungsring gedreht hat, wenn der Sicherungsring in seiner ersten Stellung ist (Figur 1), ein distales Ende (154) des Sicherungsrings über die Stirnfläche (108) des Körpers (102) herausragt.

12. Aufnahmeelement nach einem der vorhergehenden Ansprüche, **dadurch gekennzeichnet, dass** der Ventilkörper (110) mit einer ebenen Stirnfläche (111) versehen ist, die mit der ebenen Stirnfläche (108) des Körpers (102) fluchtet, wenn der Ventilkörper in der Verschlussposition des Ventils (110) liegt

13. Schnellkupplung (2) für die Verbindung von zwei Leitungen (C₁, C₂) eines Fluids, **dadurch gekennzeichnet, dass** sie ein Aufnahmeelement (10) gemäß einem der vorhergehenden Ansprüche und ein Einsteckelement (20) umfasst, das komplementär zu diesem Aufnahmeelement ausgebildet ist.

14. Kupplung nach Anspruch 13, **dadurch gekennzeichnet,**
- **dass** das Einsteckelement umfasst:
- einen zweiten Körper (202), der zu einer zweiten Längsachse (X20) zentriert ist und einen zweiten Kanal (221) für den Durchgang eines Fluids begrenzt,
- ein zweites Ventil (220), das einen zweiten Ventilkörper (210) umfasst, der in dem zweiten Kanal für den Durchgang eines Fluids aufgenommen ist und längs einer zweiten Längsachse in Bezug auf den zweiten Körper zwischen einer Verschlussposition des zweiten Ventils in Auflage gegen einen von dem zweiten Körper gebildeten Sitz (218) des zweiten Ventils ist, und eine Offenposition des zweiten Ventils entfernt vom Sitz beweglich ist,
- und **dass** der Körper mit mindestens einem Relief (226, 227) zur drehfesten Festlegung des Sicherungsrings (150) während des Zusammenfügens (F1, F3) des Einsteckelements und des Aufnahmeelements und in der gekuppelten Stellung versehen ist.

15. Kupplung nach einem der Ansprüche 13 bis 14, **dadurch gekennzeichnet, dass**, wenn der Sicherungsring (150) in seiner zweiten Stellung (Fig. 3) ist und solange der Handhabungsring sich nicht um die Längsachse (X10) des Körpers (102) des Aufnahmeelements (10) in Bezug auf die Winkelposition gegenüber dem Sicherungsring gedreht hat, wenn der Sicherungsring (150) in seiner ersten Position (Fig. 1) ist, der Sicherungsring einen Anschlag für das Annähern (F3) des Handhabungsrings und des Einsteckelements bildet.

## Claims

1. Female quick coupling (2) element (10) intended to cooperate, by press fitting (F1, F3) along a press fitting axis (X-X'), with a male quick coupling element (20) and comprising:
- a body (102) centred on a longitudinal axis (X10), defining a duct (121) for the passage of fluid and comprising, at its distal end (106), a flat front face (108),
- a relief valve (120) comprising a valve (110) lodged in the duct for the passage of fluid and mobile along the longitudinal axis in relation to the body, between a closed position of the relief valve, abutting against a seat (118) of the relief valve, and an open position of the relief valve, separated from the seat,
- a manoeuvring ring (130) mounted slidingly around the body and defining, at its distal end (134), a mouth (E10) for receiving the male element, with the ring provided with at least one relief (136) of engagement with a corresponding relief (226) of the male element,
**characterised in that** the female coupling element further comprises
- a safety ring (150) mounted around the body (102), radially inside the manoeuvring ring (130), the safety ring being mobile axially in relation to the body between a first position (Fig 1), where the manoeuvring ring and the safety ring are integral in rotation about the longitudinal axis (X₁₀), and a second position (Fig 3) where the manoeuvring ring (130) can rotate about the longitudinal axis in relation to the safety ring,
- means (170, 158; 130, 179; 170, 158; 170, 147) for transforming, when the safety ring (150) is in its second position, a movement of rotation (F₂, F₄) of the manoeuvring ring about the longitudinal axis and in relation to the safety ring, into a movement of axial translation (F₃) of the body (102) in relation to the manoeuvring ring (130).

2. Female element according to claim 1, **characterised in that** the means for transforming movement comprise a drive ring (170) mounted mobile in rotation and integral in translation around a body (102), **in that** one (170) of the rings, among the manoeuvring ring (130) and the drive ring (170), is provided with at least one member (178; 173) for fastening in rotation the drive ring with the manoeuvring ring, with possibility of relative axial movement, and **in that** one of the rings (170; 150) among the drive ring and the safety ring (150) is provided with at least one member (178; 174) for guiding the drive ring (170) in a helical movement in relation to the safety ring (150).

3. Female element according to claim 1, **characterised in that** the means for transforming movement comprise a drive ring (170) mounted mobile in rotation and integral in translation around a body (102), **in that** one (170) of the rings, among the safety ring (150) and the drive ring (170), is provided with at least one member (172; 175) for fastening in rotation the drive ring with the safety ring with possibility of relative movement, and **in that** one of the rings (170; 130) among the drive ring (170) and the manoeuvring ring (130) is provided with at least one member (148; 175) for guiding the drive ring (170) in a helical movement in relation to the manoeuvring ring (130).

4. Female element according to one of claims 2 or 3, **characterised in that** the member for fastening in rotation (178; 173; 175) and the member for guiding (178; 174; 175) are integral or monoblock with the same ring (170).

5. Female element according to claim 4, **characterised in that** the member for fastening in rotation and the member for guiding are confounded into the same member (178; 175).

6. Female element according to one of claims 2 to 3, **characterised in that** the member for fastening in rotation and the member for guiding are two separate members (148, 172; 173, 174).

7. Female element according to claim 6, **characterised in that** the member for fastening in rotation (172) and the member for guiding (148) are integral or monoblock with two separate rings (130, 170) among the manoeuvring ring (130), the safety ring (150) and the drive ring (170).

8. Female element according to one of claims 2 to 7, **characterised in that** the member for fastening in rotation is a pin (178; 172; 173; 175) integral or monoblock with one (170) of the rings and engaged in a groove (138; 168B; 168D), which is at least partially longitudinal, of another (130; 150) of the rings, parallel to the longitudinal axis of the body, and the member for guiding is a pin (178; 148; 174; 175) integral or monoblock with one (170; 130) of the rings and engaged in a helical groove (158; 179; 158; 147) of another (150; 170; 130) of the rings.

9. Female element according to claims 5 and 8, **characterised in that**, in the first position of the safety ring, the pin (178) for fastening in rotation and guiding is engaged in a notch (160) that extends the helical groove (158) and which extends (X160) parallel to the longitudinal axis (X10) of the body.

10. Female element according to one of the preceding claims, **characterised in that** it comprises means (180) for elastically returning the safety ring (150) towards its first position.

11. Female element according to one of the preceding claims, **characterised in that**, when the safety ring (150) is in its second position (Fig. 3) and as long as the manoeuvring ring (130) has not rotated about the longitudinal axis (X10) in relation to its angular position with regards to the safety ring when the safety ring is in its first position (Figure 1), a distal end (154) of the safety ring protrudes beyond the front face (108) of the body (102).

12. Female element according to one of the preceding claims, **characterised in that** the valve (110) is provided with a flat front face (111) flush with the flat front face (108) of the body (102) when the valve is in closed position of the relief valve (110).

13. Quick coupling (2) for the joining of two fluid pipes (C₁, C₂), **characterised in that** it comprises a female element (10) according to one of the preceding claims and a male element (20) complementary with this female element.

14. Coupling according to claim 13, **characterised**
- **in that** the male element comprises:
- a second body (202) centred on a second longitudinal axis (X20) and defining a second duct (221) for the passage of fluid,
- a second relief valve (220) comprising a second valve (210) lodged in the second duct for the passage of fluid and mobile along the second longitudinal axis in relation to the second body, between a closed position of the second relief valve, abutting against a seat (218) of the second relief valve formed by the second body, and an open position of the second relief valve, separated from the seat,
- and **in that** the second body is provided with at least one relief (226, 227) for immobilising in rotation the safety ring (150), during press fitting (F1, F3) of the male and female elements and in coupled configuration.

15. Coupling according to one of claims 13 to 14, **characterised in that**, when the safety ring (150) is in its second position (Fig 3) and as long as the manoeuvring ring has not rotated about the longitudinal axis (X10) of the body (102) of the female element (10) in relation to the angular position with regards to the safety ring when the safety ring (150) is in its first position (Fig. 1), the safety ring constitutes an abutment to the bringing together (F3) of the manoeuvring ring and of the male element.
